# EUROPÄISCHE PATENTSCHRIFT

(11) **EP 2 664 832 B1**
(45) Veröffentlichungstag und Bekanntmachung des Hinweises auf die Patenterteilung: **09.09.2015**
(21) Anmeldenummer: 13167504.3
(22) Anmeldetag: 13.05.2013
(51) Int. Cl.: F16K 39/02

(54) **Ventil**
Valve
Valve

(30) Priorität: 16.05.2012 DE 102012104285
(43) Veröffentlichungstag der Anmeldung: 20.11.2013
(73) Patentinhaber: SVM Schultz Verwaltungs-GmbH & Co. KG, 87700 Memmingen (DE)
(72) Erfinder: Weiß, Johann, 88239 Wangen (DE); Wassermann, Ralph, 87700 Memmingen (DE)
(74) Vertreter: Pfister, Stefan Helmut Ulrich

(56) Entgegenhaltungen:
- EP-A1- 2 469 140
- DE-C- 515 502

## Beschreibung

Die Erfindung betrifft ein von einem Antrieb betätigbares Ventil, wobei der Antrieb einen Anstellkörper relativ zu einer Düse zum Öffnen und Schließen der Düse positioniert, wobei der Anstellkörper an seiner der Düse zugewandten Seite ein Dichtelement aufweist, das in der geschlossenen Stellung des Ventils auf dem Düsensitz liegt und in der geöffneten Stellung des Ventils vom Düsensitz abgehoben ist.

Vorgenannte Ventile sind im Stand der Technik weit verbreitet. Es sind zum Beispiel elektromagnetisch angetriebene Ventile bekannt, die einen Anstellkörper aufweisen, der einstückig mit dem Anker des Elektromagneten verbunden ist oder mit diesem in unmittelbaren Wirkkontakt steht. Der Anstellkörper seinerseits besitzt an seinem vorderen, der Düse zugewandten Ende, eine käfigartige Aufnahme, in welcher das Dichtelement relativ zum Anstellkörper frei beweglich, ungeführt eingelegt ist.

DE 515 502 offenbart ein von einem Antrieb betätigbares Ventil, wobei der Antrieb einen Anstellkörper relativ zu einer Düse zum Öffnen und Schließen der Düse positioniert, wobei der Anstellkörper an seine der Düse zugewandten Seite ein Dichtelement aufweist, das in der geschlossenen Stellung des Ventils auf dem Düsensitz liegt und in der geöffneten Stellung des Ventils vom Düsensitz abgehoben ist, wobei das Dichtelement über ein Federelement am Anstellkörper gelagert und relativ zu diesem beweglich ist.

Der Anstellkörper wird aufgrund der Bewegung des Antriebes bewegt, dies kann zum Beispiel eine Längs-, eine Dreh- oder Klappbewegung sein. Diese Bewegung dient dazu, das Dichtelement in geeigneter Weise auf den Düsensitz aufzulegen und von diesem wieder abzuheben und somit eine Schließ- oder Öffnungsstellung des Ventiles zu bilden. Es ist klar, dass der Anstellkörper entsprechende Ausnehmungen oder Öffnungen aufweist, um das oftmals innenliegende Dichtelement in Wirkkontakt mit dem Düsensitz treten zu lassen.

Gattungsgemäße Ventile werden in einem großen Temperaturbereich, zum Beispiel von -40°C bis +140°C betrieben. Das Dichtelement besteht oftmals aus einem Elastomer, das einen anderen Ausdehnungskoeffizienten aufweist als das Material des Anstellkörpers. Hieraus resultiert die Gefahr, dass die üblicherweise vorgesehene Gleitpassung nur in einem engen Temperaturband funktioniert und in einem anderen Temperaturband ein Verklemmen des Dichtelementes relativ zum Anstellkörper resultiert, was die sichere Schließ- und Öffnungsfunktion des Ventils beeinträchtigt.

Als ein mögliches Lösungsszenario wurde daher eine größeres Spiel zwischen dem Dichtelement und seiner Führung an dem An-stellkörper vorgeschlagen, was zwar grundsätzlich eine Betriebsfähigkeit in einem größeren Temperaturintervall ermöglicht, aber die Gefahr in sich birgt, dass das Dichtelement leicht kippen kann. Es taucht auch ein anderes Problem auf, nämlich das der Dichtelement bezogen zum Düsensitz nicht immer an der gleichen Stelle, sondern seitlich oder radial versetzt, aufliegt. Das elastische Material besitzt eine insbesondere temperaturabhängige Rückstellfähigkeit, die bei tiefen Temperaturen oftmals schlechter ist. Das äußert sich dadurch, dass die Zeitdauer, die für ein vollständiges Entspannen des auf dem Düsensitz komprimierten Dichtelementes benötigt wird, länger ist, als die mittlere Taktzeit zwischen zwei Schließstellungen des Ventils. Das bedeutet, dass in diesen Fällen der noch nicht vollständig entspannte Dichtelement schon im nächsten Schließschritt des Ventils wieder auf den Düsensitz gedrückt wird. Besteht nun ein zu großes radiales Spiel des Dichtelementes im Anstellkörper, besteht die Gefahr, dass das Dichtelement radial, seitlich versetzt auf den Düsensitz gelangt, was unweigerlich zu entsprechenden Leckagen in dem Ventil führt. Es ist klar, dass dadurch die erwartete Funktionalität des Ventils massiv gestört ist.

Ausgehend von diesem Stand der Technik ist es Aufgabe der vorliegenden Erfindung, ein Ventil vorzuschlagen, das möglichst betriebssicher ist.

Ausgehend von dem vorbeschriebenen Ventil schlägt die Erfindung zur Lösung der vorgenannten Aufgabe vor, dass das Dichtelement über ein Federelement am Anstellkörper gelagert und relativ zu diesem beweglich ist. Das bekannte Dichtelement wird erfindungsgemäß mit einem separaten Federelement verbunden, wobei das Federelement das Dichtelement am Anstellkörper lagert und eine entsprechende (definierte) Beweglichkeit relativ zum Anstellkörper erlaubt. Die Lagerfunktion des Federelementes erreicht überraschender Weise, dass die erfindungsgemäßen Ventile eine sehr viel höhere Zuverlässigkeit aufweisen, da ein seitliches bzw. radiales Versetzen des Dichtkörpers relativ zum Düsensitz - egal bei welchem Temperaturniveau - nicht gegeben ist und somit die Zuverlässigkeit des Ventils nicht mehr von der temperaturabhängigen Rückstellfähigkeit des Elastomers des Dichtelementes abhängt.

Überraschenderweise werden aber mit dem erfindungsgemäßen Vorschlag noch eine Vielzahl weiterer Vorteile erreicht.

Die erfindungsgemäß vorgeschlagene Führung des Dichtelementes über das separate Federelement ergibt, dass das Dichtelement nicht mehr an den Seitenwandungen des käfigartig ausgestalteten Aufnahmeraumes anliegt und dort reiben und verschleißen kann, wie es im Stand der Technik beobachtet wurde. Der Verschleiß an der Mantelfläche des oftmals zylindrischen Dichtelementes (die Stirnfläche dient der Dichtung) beeinträchtigt zwar noch nicht sofort die Dichteigenschaft des Dichtelementes, begrenzt jedoch in erheblichem Maße die Langzeitstabilität des Ventils.

Im Stand der Technik wurde dem Problem der Führung des Elastomers in dem Anstellkörper durch den Einsatz einer entsprechenden Führungshülse mit geeigneten Materialeigenschaften begegnet. Dieser sehr aufwendige Bearbeitungsschritt wird durch den erfindungsgemäßen Vorschlag vermieden.

Die Lagerung des Dichtelementes über das Federelement wirkt auch einem drohenden Kippen des Dichtelementes wirksam entgegen und erhöht erheblich die Zuverlässigkeit des erfindungsgemäßen Ventils.

Die Aufteilung der Funktionen Beweglichkeit und Dichtfähigkeit auf einerseits das Federelement und andererseits auf das Dichtelement erlaubt auch, diese beiden Funktionen unabhängig voneinander entsprechend zu optimieren. Mit dem erfindungsgemäßen Vorschlag ist es somit möglich, das Federelement unabhängig von den Materialeigenschaften des Elastomers des Dichtelements so auszulegen und zu dimensionieren, dass ein optimales Zusammenwirken des Dichtelementes mit der Bewegung des Anstellkörpers erfolgt. Dies kann sowohl in der geöffneten, wie auch in der geschlossenen Stellung des Ventils ausgenutzt werden und ist von Vorteil.

Aus dem erfindungsgemäßen Vorschlag resultiert zum Beispiel eine verbesserte Konstanz der Durchflusswerte des durch die Ventile strömenden Mediums, da die (axiale wie radiale) Lage des Dichtelementes aufgrund des Federelementes exakt vorgebbar und auch dauerhaft einhaltbar, d.h. reproduzierbar ist.

Der erfindungsgemäße Vorschlag löst somit nicht nur die eingangs gestellte Aufgabe, sondern zeigt überrschenderweise eine Vielzahl weiterer Vorteile.

Eine Verbesserung des Vorschlages sieht vor, dass der Anstellkörper einen Mitnehmer aufweist, der zumindest beim Anheben des Dichtelementes vom Düsensitz am Dichtelement anliegt. Wie beschrieben ist vorgesehen, dass eine Beweglichkeit des Dichtelementes gegenüber dem Anstellkörper vorgesehen ist. Dies wird letztendlich durch den Federweg bzw. den Hub des Federelementes begrenzt. Beim Aufliegen des Dichtelementes auf dem Düsensitz werden üblicherweise Anhaft- oder Anklebphänomene beobachtet, weswegen es gut ist, auf das Dichtelement eine separate Abhebekraft aufzuprägen. Diese Abhebekraft würde ohne weitere Vorkehrungen das Federelement belasten, weswegen der Einsatz eines separaten Mitnehmers hier von entsprechendem Vorteil ist, da zum einen - genau gesteuert durch die Lage des Mitnehmers relativ zum Dichtelement - der Zeitpunkt des Ablösens des Dichtelements vom Düsensitz bestimmbar ist und zum anderen das Federelement vor übermäßiger Belastung geschützt ist.

Der Mitnehmer ist bevorzugt starr an dem Anstellkörper angeordnet und bewegt sich mit diesem mit. Daher ist das Dichtelement auch relativ zu dem Mitnehmer beweglich. Gerade bei der Abzugsbewegung liegt der Mitnehmer noch nicht am Dichtelement an, sondern überwindet zuerst eine gewisse Strecke, um dann auf das Dichtelement einzuwirken.

Der Mitnehmer kann dabei als Anlagekragen ausgebildet sein, der am Dichtelement auf der dem Düsensitz zugewandten Seite anliegt. Es besteht aber auch die Möglichkeit, dass das Dichtelement eine Umfangsnut aufweist, und der Mitnehmer bzw. Anlagekragen in diese in der Mantelfläche liegende Umfangsnut hineinsteht und dort bei der Abzugsbewegung an der Nutwand anliegt und das Dichtelement mitzieht. Es sind hier verschiedene Varianten möglich, wie der Mitnehmer relativ zu dem Dichtelement angeordnet und ausgebildet ist. Hierauf ist die Erfindung nicht beschränkt.

Auch im Hinblick auf die Ausgestaltung des Anlagekragens ist die Erfindung sehr variabel ausgestaltbar. So ist zum Beispiel vorgesehen, dass der Anlagekragen ring-, punkt- oder segmentartig ausgebildet ist oder abschnittsweise anliegend mit dem Dichtelement zusammenwirkt. Natürlich ist es möglich, dass der Anlagekragen bzw. Mitnehmer an der der Düse zugewandten Dichtelementseite an dieser anliegt.

Eine weitere erfindungsgemäße Variante sieht vor, dass der Anstellkörper auf der der Düse zugewandten Seite eine zumindest teilgeöffnete, den Mitnehmer bildende, das Dichtelement zumindest teilweise abdeckende Abdeckkappe aufweist. Die Abdeckkappe kann dabei eine Mehrzahl von Funktionen übernehmen. Zum einen schließt sie den Aufnahmeraum, welcher das Dichtelement aufnimmt, käfigartig ab. Sie bildet somit auch einen Schutz für das Dichtelement. Durch die bevorzugt frontseitige Öffnung, die geschickter Weise nicht mit dem Düsensitz kollidiert, ist das Zusammenwirken des Dichtelementes mit der Düse bzw. dem Düsensitz gewährleistet. Diese Öffnung ist zum Beispiel als Aussparung beschrieben. Der Rand der Aussparung ist dabei z.B. als ringartiger Anlagekragen ausgebildet.

In einer weiteren Verbesserung dieses Vorschlages ist vorgesehen, dass die Abdeckkappe einen Aufnahmeraum des Anstellkörpers zumindest teilweise verschließt, der Aufnahmeraum das Dichtelement aufnimmt und die Abdeckkappe zumindest eine Öffnung aufweist, durch welche der Aufnahmeraum bei geschlossener Stellung des Ventils belüftbar ist.

Die Abdeckkappe kann auch so ausgebildet sein, dass eine Begrenzung oder ein Abschluss des Aufnahmeraumes nicht stattfindet.

Gattungsgemäße Ventile werden z.B. für das Steuern von strömenden Medien im Pneumatik- und gegebenenfalls auch im Hydraulikbereich eingesetzt. Eine vollständige Entlüftung des Bereiches um das Dichtelement herum erleichtert den Betrieb des Ventils und spart auch Energie. Im geschlossenen Zustand des Ventils drückt der Anstellkörper (entweder durch seinen Antrieb oder eine Rückstellfeder oder Ähnliches) das Dichtelement dicht auf den Düsensitz. Die Anordnung von entsprechenden Öffnugnen, die eine Belüftung bzw. Hinterlüftung des Aufnahmeraumes gerade bei geschlossener Stellung des Ventils erlaubt, reduziert den Anhafteffekt, der gerade beim Öffnen des Ventils aufzutreten vermag.

Der Aufbau des Anstellkörpers ist dabei so, dass dieser zum Beispiel zumindest die seitlichen Wandungen des Aufnahmeraumes bildet, wenngleich dies erfindungsgemäß auch anders gestaltet werden kann. Auf den der Düse zugewandten Bereich wird dann das auf dem Federelement angeordnete Dichtelement positioniert und von der aufgesteckten Abdeckkappe verborgen.

Die Abdeckkappe ihrerseits kann z.B. eine teller- oder topfartige Ausgestaltung aufweisen und seitlich an dem Anstellkörper angeschlossen oder gehalten werden. In diesem Fall wird der Aufnahmeraum primär von der Abdeckkappe gebildet, die Stirnfläche des Anstellkörpers schließt diesen Raum ab. Es sind verschiedene Varianaten für die Realisierung des Aufnahmeraumes denkbar. In dem Aufnahmeraum ist das Federelement mit dem Dichtelement angeordnet und die Abdeckkappe ist an dem Anstellkörper in geeigneter Weise zu befestigen, wozu z.B. eine einstückige Ausgestaltung der Abdeckkappe mit dem Anstellkörper zählt. Dies wird z.B. durch einen entsprechenden formgebenden Bearbeitungsschritt realisiert, bei welchem eine Hülse nach innen gefaltet oder gestaucht wird.

Neben dieser einstückigen Ausgestaltung der Abdeckkappe mit dem Anstellkörper ist aber auch eine Verbindung durch Anschweißen oder Anlöten bzw. Auflöten der Abdeckkappe an dem Anstellkörper möglich. Auch eine stoffliche Verbindung z.B. durch eine Klebeschicht, also ein Ankleben ist erfindungsgemäß erfasst, wie auch mechanische, also kraftschlüssige oder formschlüssige Verbindungstechniken, wie ein Aufstemmen, Aufbörteln, Aufschnappen oder Aufclipsen.

Geschickterweise wird dabei eine Verbindungstechnik gewählt, die nicht nur die Abdeckkappe zuverlässig an dem Anstellkörper befestigt, sondern gleichzeitig das Federelement am Anstellkörper in gewünschter Weise festlegt.

In einer bevorzugten Weiterentwicklung des Vorschlages ist vorgesehen, dass das Dichtelement eine Durchdringungsöffnung aufweist, die einerseits in die Düse mündet und andererseits dem Anstellkörper zugewandt eine Vorsteuerdüse bildet und die Vorsteuerdüse in der geschlossenen Stellung des Ventils von der dem Dichtelement zugewandten Dichtfläche des Anstellkörpers verschlossen ist.

Durch das Konzept einer Vorsteuerdüse wird die notwendige Kraft zum Öffnen des geschlossenen Ventiles reduziert, was sich günstig auf die Konstruktion des Antriebes auswirkt. Die Funktionsweise ist insbesondere in der beiliegenden Figur ausführlich beschrieben und gezeigt. Üblicherweise ist die Durchdringungsöffnung im Dichtelement achsparallel zu der die Düse beschreibenden Achse. Hierauf ist die Erfindung jedoch nicht beschränkt, die Durchdringungsöffnung kann auch schräg verlaufend vorgesehen sein. Auch ist die Ausgestaltung der Durchdringungsöffnung gemäß der Erfindung sehr variabel, es kann eine Bohrung, also eine zylindrische Durchdringungsöffnung vorgesehen sein, genauso wie eine Konusform oder auch Zwischenform hiervon. Der Pfiff bei dem Einsatz einer Vorsteuerdüse liegt darin, dass das Dichtelement mehrfach für Dichtaufgaben verwendet wird, nämlich einerseits zum Verschließen bzw. Freigeben der (Haupt-) Düse und andererseits selbst eine Düse bildet, die mit dem dem Dichtelement zugewandten Boden oder der Dichtfläche des Anstellkörpers verschließbar ist. Vorteilhafter Weise wird die Elastizität des Materials des Dichtelementes zweifach für die Dichtaufgabe ausgenutzt.

Geschickter Weise ist dabei der wirksame Durchmesser der Vorsteuerdüse geringer als der Durchmesser der (Haupt-) Düse.

An dem Anstellkörper ist, dem Dichtelement zugewandt, die Dichtfläche vorgesehen. Üblicherweise ist dies die der Düse zugewandte Stirnfläche des Anstellkörpers, hierauf ist die Erfindung aber nicht beschränkt. Dies kann konstruktiv auch eine andere Seite oder Fläche des Anstellkörpers übernehmen. In der geschlossenen Stellung des Ventils ist an das, die Dichtfläche der Vorsteuerdüse umgebende, aus elastischem Material bestehende Dichtelement ein verformender Dichtring oder Dichtwulst angeordnet. Dieser Dichtring bzw. Dichtwulst steht gegenüber der Dichtfläche in Richtung des Dichtelementes vor und bewirkt seitlich, bzw. radial daneben eine entsprechende Freistellung oder Hinterschneidung, die druckausgeglichen ist mit dem übrigen Druckpotential auf jener Seite des Ventils bzw. Dichtelements. Hieraus resultiert, dass der gleiche Betriebsdruck an der Vorsteuerdüse und seiner Querschnittsfläche anliegt, wie an der Hauptdüse, wodurch für das Öffnen der Vordüse eine geringe Öffnungskraft benötigt wird. Hierauf stellt das Konzept der Vorsteuerdüse direkt ab.

Hierbei ist zu bemerken, dass das Konzept der Freistellung aber auch anders realisiert werden kann, z.B. mit einem entsprechend ausgebildeten Dichtelement, das auf der der Dichtfläche zugewandten Seite der Durchdringungsöffnung einen separaten Dichtrand, Dichtring oder Dichtwulst aus dem elastischen Material des Dichtelementes bildet, was zu dem gleichen Ergebnis führt.

Das Federelement ist bevorzugter Weise aus flächig elastischem Material, z.B. einem Federstahl gebildet. Es ist auf die federnde, das Dichtelement anstellende bzw. bewegende Aufgabe in geeigneter Weise optimiert, wozu z.B. auch die Auswahl des Materials des Federelementes zählt.

Das Federelement bewirkt eine bezüglich des Düsensitzes radial und insbesondere reibungsfreie Führung des Dichtelementes am Anstellkörper. Die Formulierung "am Anstellkörper" schließt dabei natürlich auch eine Ausgestaltung der Führung des Dichtelementes im Anstellkörper mit ein. Durch den erfindungsgemäßen Vorschlag wird zum einen ein übermäßiger Verschleiß des Dichtelementes durch seitliches Anliegen und Reiben am Anstellkörper bzw. dessen Aufnahmeraumes zuverlässig vermieden, andererseits erreicht die Anordnung des Federelementes eine exakte, insbesondere auch exakt wiederholbare Positionierung des Dichtelementes auf dem Düsensitz.

Für die Befestigung des Dichtelementes auf dem Federelement sind eine Vielzahl unterschiedlicher Konzepte möglich, die Erfindung ist hier nicht abgeschlossen. So kann das Dichtelement auf dem Federelement aufgespritzt, eingeknöpft, aufgeclipst, aufvulkanisiert oder angeklebt sein. Es ist jede Verbindungstechnik von der Erfindung umfasst, die dazu geeignet ist, dass das Federelement das Dichtelement bevorzugt dauerhaft trägt.

Es wurde bereits darauf hingewiesen, dass das Dichtelement bevorzugt als Elastomer ausgebildet ist, beispielsweise ist es möglich, das Dichtelement aus verhältnismäßig weichem Material, z.B. mit mindestens 60 Shore A zu bilden, bzw. grundsätzlich auch Elastomere mit einer Shore-Härte unter 80 Shore A bzw. 85 Shore A einzusetzen. Dies ist möglich, weil die Führung des Dichtelementes auf dem Federelement zu einem entsprechend schonenden Einsatz des Dichtelementes führt und daher das Dichtelement auf die abdichtende Aufgabe optimiert werden kann, was natürlich mit weichem Material sehr wirkungsvoll möglich ist.

Des Weiteren ist an dem Dichtelement bevorzugter Weise auf der der Düse zugewandten Seite eine, insbesondere als Freistellung wirkende Ringnut vorgesehen. Diese Ringnut oder Freistellung bewirkt, dass beim Anliegen des Dichtelementes auf dem Düsensitz in dem Dichtelement keine Kerbwirkung verursacht wird. Die Anordnung ist dabei so gewählt, dass am Material, von außen nach innen gesehen, der äußere Bereich des Dichtelementes (welches der Düse zugewandt ist) bei der Öffnungs- bzw. Rückzugsbewegung des Anstellkörpers mit dem Mitnehmer zusammenwirkt und von diesem erfasst wird. Radial nach innen schließt sich an diesen Bereich dann die vorbeschriebene Ringnut als Freistellung an, die dann übergeht in den den Düsensitz bzw. die Düse schließenden bzw. abdichtenden Dichtelementebereich.

Ein weiterer Vorteil des Einsatzes des Federelementes, welches das Dichtelement trägt liegt darin, dass je nach konstruktiver Gegebenheit das Federelement mit einer Vorspannung ausgestattet werden kann und somit die unbelastete Lage des Dichtelementes in dem erfindungsgemäßen Ventil eindeutig festlegbar ist. Die Vorspannung kann dabei entsprechende Voreinstellungen in unterschiedlichen Richtungen bewirken, was von Vorteil ist. Insbesondere ist eine flächige Ausgestaltung des Federelement vorgesehen, was ausgehend von einer unbelasteten Mittellage eine Vorspannung in zwei Richtungen (rechtwinklig zur flächigen Ausgestaltung des Federelementes) erlaubt. In diesem Fall stehen beide Vorspannrichtungen (z.B. in Richtung Anstellkörper oder von diesem entfernt) zur Verfügung. Es ist natürlich auch möglich, dass keine Vorspannung auf das Federelement eingeprägt wird.

In einer bevorzugten Ausgestaltung des Federelementes schöpft das Federelement seine federnde Eigenschaft durch eine elastische Verformung seiner flächigen Ausgestaltung. Dies kann z.B. dadurch erreicht werden, dass das Federelement als Mäanderfeder, Tellerfeder, Sternfeder oder Blattfeder ausgebildet ist. Durch eine solche Ausgestaltung wird eine sehr platzsparende Anordnung realisiert, wobei insbesondere hierbei von Vorteil ist, dass kein sehr großer Hub des Federelementes in dem erfindungsgemäßen Ventil benötigt wird.

Es ist zu bemerken, dass natürlich auch andere Ausgestaltungen des Federelementes wie z.B. Kegelfeder oder auch eine Schraubenfeder oder andere Federn vorgesehen sein können.

Das Federelement ist in einen Aufnahmebereich und einen Federbereich unterteilbar, wobei das Dichtelement im (zentralen) Aufnahmebereich angeordnet ist. Durch diese Aufteilung wird eine übermäßige mechanische Beanspruchung des Dichtelementes vermieden, was z.B. durch entsprechende Variationen der Steifheit des Federelementes im Aufnahmebereich im Verhältnis zum Federbereich erreicht wird.

Geschickter Weise ist im Federbereich zumindest eine Durchdringungsöffnung vorgesehen. Diese dient für eine Hinterlüftung des Vordüsenbereiches und dient gleichzeitig als Filter bzw. Element, das Schmutzpartikel zurückhält, die unter Umständen in dem zu steuernden Medium mitgeführt werden. Solche Elemente könnten unter Umständen die Vorsteuerdüse unbrauchbar machen und somit das gesamte Ventil ausfallen lassen. Durch die Ausgestaltung der Durchdringungsöffnung im Federbereich ist die "Filtergröße" problemlos einstellbar.

Das das Dichtelement tragende Federelement ist bevorzugter Weise zwischen Abdeckkappe und Anstellkörper angeordnet bzw. in dem von Abdeckkappe und Anstellkörper begrenzten Aufnahmeraum vorgesehen. Für eine zuverlässige Führung des Dichtelementes ist natürlich auch eine entsprechende Befestigung des Federelementes am Anstellkörper vorgesehen, welche z.B. zusammen mit der Befestigung der Abdeckkappe realisiert sein kann oder hiervon unabhängig, z.B. durch einen separaten Befestigungsschritt, bevor die Abdeckkappe aufgesetzt und befestigt wird. Dabei kann das Federelement z.B. mit dem Anstellkörper verschweißt, aufgeklebt, aufgestemmt, aufgebörtelt, angelötet, eingeclipst oder in anderer Weise mechanisch oder stofflich verbunden sein.

Geschickter Weise wird vorgesehen, dass eine im Wesentlichen parallele Wirkrichtung des Federelementes und der Anstell- bzw. Rückzugsbewegung des Anstellkörpers besteht. Durch diese Parallelität der Richtungen wird das Zusammenspiel zwischen den Elementen erheblich vereinfacht, wenngleich auch hiervon abweichende Konzepte von der Erfindung umfasst sind, z.B. wenn der Anstellkörper und/oder das Dichtelement je auf einer Bogen- oder Kreisbahn geführt wird. Auch diese Konzepte sind von dem erfindungsgemäßen Gedanken umschlossen.

In einer bevorzugten Ausgestaltung der Erfindung ist als Antrieb ein Elektromagnet vorgesehen, wobei der Elektromagnet eine mit elektrischem Strom beaufschlagbare Spule aufweist und ein beweglich gelagerter Anker bei Strombeaufschlagung, insbesondere gegen die Kraft einer Rückstellfeder bewegbar ist und der Anker den Anstellkörper bewegt oder der Anker den Anstellkörper bildet. Die Verwendung eines Elektromagneten als Antrieb des erfindungsgemäßen Ventils ist eine bevorzugte von mehreren unterschiedlichen alternativen Antriebskonzepten. Der Anstellkörper, der die Bewegung ausführt, kann einstückig mit dem von der Spule des Elektromagneten bewegten Anker sein oder aber von diesem getrennt vorgesehen bzw. gelagert sein. Es ist dann eine entsprechende mechanische Kopplung zwischen Anker und Anstellkörper vorgesehen.

Die Erfindung umfasst natürlich auch Lösungen, bei welchen die Rückzugsbewegung nicht durch eine Rückstellfeder, sondern durch einen ebenfalls elektromagnetisch hergestellten Bewegungsimpuls realisiert wird.

Auch ist die Erfindung nicht auf eine ausschließlich geradlinige Bewegung des Anstellkörpers in dem erfindungsgemäßen Ventil fixiert, sondern umfasst z.B. auch eine Dreh- oder Klappbewegung des Anstellkörpers, also jede Bewegung, die geeignet ist, das Dichtelement sicher und zuverlässig reproduzierbar auf den Düsensitz auf- und von diesem wieder abzuheben. Ein geradliniges Konzept der Bewegung des Ankerkörpers hat natürlich entsprechende Vorteile bei der Bewegung, aber der Einsatz des Federelementes erlaubt es auch, z.B. eine Dreh- oder Klappbewegung des Anstellkörpers im Bereich des Düsensitzes und einen entsprechenden Ausgleich durch eine entsprechende Vorspannung des Federelementes vorzusehen.

In der Zeichnung ist die Erfindung insbesondere in einem Ausführungsbeispiel schematisch dargestellt. Es zeigen:
- Fig. 1a, 1b und 1c: das erfindungsgemäße Ventil jeweils im Schnitt in drei unterschiedlichen Stellungen, nämlich in der komplett geschlossenen Stellung (Fig. 1a), mit geöffneter Vorsteuerdüse (Fig. lb) und komplett geöffnet (Fig. 1c);
- Fig. 2a, 2b, 2c, 2d, 2e, 2f: jeweils in dreidimensionaler Ansicht verschiedene Ausgestaltungen des Federelementes mit daran angeordnetem Dichtelement gemäß der Erfindung.

In den Figuren sind gleiche oder einander entsprechende Elemente jeweils mit den gleichen Bezugszeichen bezeichnet und werden daher, sofern nicht zweckmäßig, nicht erneut beschrieben.

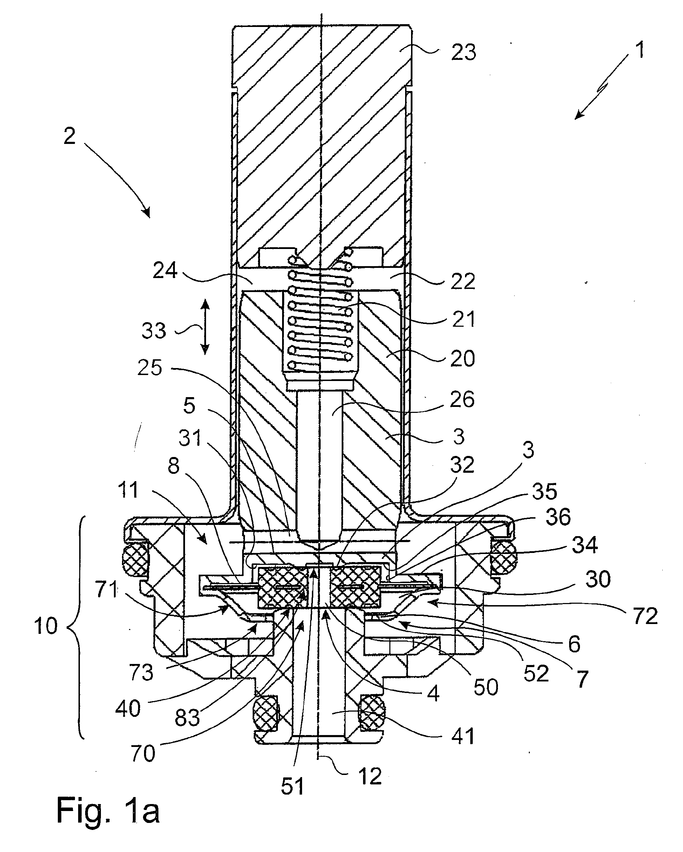

In Fig. 1a ist das erfindungsgemäße Ventil 1 in der geschlossenen Stellung gezeigt. Das Ventil 1 besitzt einen Ventilteil 10 sowie einen Antrieb 2, der in den gewählten Ansichten nicht vollständig ausgeführt ist. Der Antrieb 2 ist z.B. als Elektromagnet realisiert, der in bekannter Weise eine mit elektrischem Strom beaufschlagbare Spule (nicht gezeigt) aufweist und einen beweglich gelagerten Anker 20 durch Strombeaufschlagung, insbesondere gegen die Kraft einer Rückstellfeder 21 bewegbar ist.

Der Anker 20 seinerseits wirkt auf den Anstellkörper 3, der bereits Teil des Ventilteils 10 ist und in den Ventilraum 11 hineinragt und die vom Anker 20 erzeugte Bewegung in eine Schließ- oder Öffnungsbewegung umsetzt. Wie bereits beschrieben, können Anker 20 und Anstellkörper 3 zwei von einander getrennte Bauteile oder ein (gemeinsames) Bauteil mit zwei Funktionen sein, also der Anker 20 bildet den Anstellkörper 3. Letztere Variante ist gezeigt.

In bekannter Weise ist der Anker 20 in dem Ankerraum 22 beweglich gelagert, die Bewegungsrichtung ist durch den Doppelpfeil 33 angedeutet, die auch gleichzeitig der Bewegungsrichtung des Anstellkörpers 3 entspricht. Auf der dem Anstellkörper 3 bzw. dem Ventilteil 10 abgewandten Seite des Ankerraumes 22 bzw. des Ankers 20 schließt sich nach einem Luftspalt 24 der Kern oder Magnetkern 23 an, der als stationäres Teil ein Bauteil des Elektromagneten ist und die Magnetfeldlinien führt. Die in Fig. 1a gezeigte abgefallene Stellung des Eleketromagneten ergibt, dass der sich zwischen Anker 20 und Magnetkern 23 ausbildende Luftspalt 24 (im Ankerraum 22) hier am größten ist. Der Anker 20 und somit auch der Anstellkörper 3 wird über die Rückstellfeder 21 vom Kern abgestützt und (in der hier gezeigten Ansicht) nach unten geschoben, wodurch das im bzw. am Anstellkörper 3 gelagerte Dichtelement vollflächig auf den Düsensitz 40 der Düse 4 aufsitzt. Im stromlosen Zustand ist dieses Ventil geschlossen. Das erfindungsgemäße Konzept funktioniert aber auch bei stromlos offenen Ventilen.

Der Ankerraum 22 steht durch eine axiale Bohrung 26 und eine Querbohrung 25 mit dem Ventilraum 11 in druckausgeglichener Beziehung, um dadurch einen Druckausgleich bzw. eine Hinterlüftung bei der Ankerbewegung zu ermöglichen und so eine rasche Bewegung des Ankers 20 zu erlauben.

In dem Ventilteil 10 ist ein Ventilraum 11 vorgesehen, der mit einem Druckanschluss in Wirkverbindung steht. Die Düse 4 wird, je nach Stellung des Anstellkörpers 3, von einem Dichtelement 5 geöffnet und geschlossen. An die Düse 4 schließt der Düsenanschluss 41 z.B. in Richtung eines Arbeitsanschlusses an.

An seiner der Düse 4 zugewandten Seite trägt der Anstellkörper 3 das Dichtelement 5. Hierzu befindet sich an der der Düse 4 zugewandten Seite des Anstellkörpers 3 ein Aufnahmeraum 30, in welchem das Dichtelement 5 im Wesentlichen parallel zur Bewegungsrichtung 33 des Anstellkörpers 3/Ankers 20 beweglich geführt ist.

Geschickter Weise und im Sinne der Erfindung ist dabei das Dichtelement 5 bezüglich seiner freien Beweglichkeit im Aufnahmeraum 30 beschränkt.

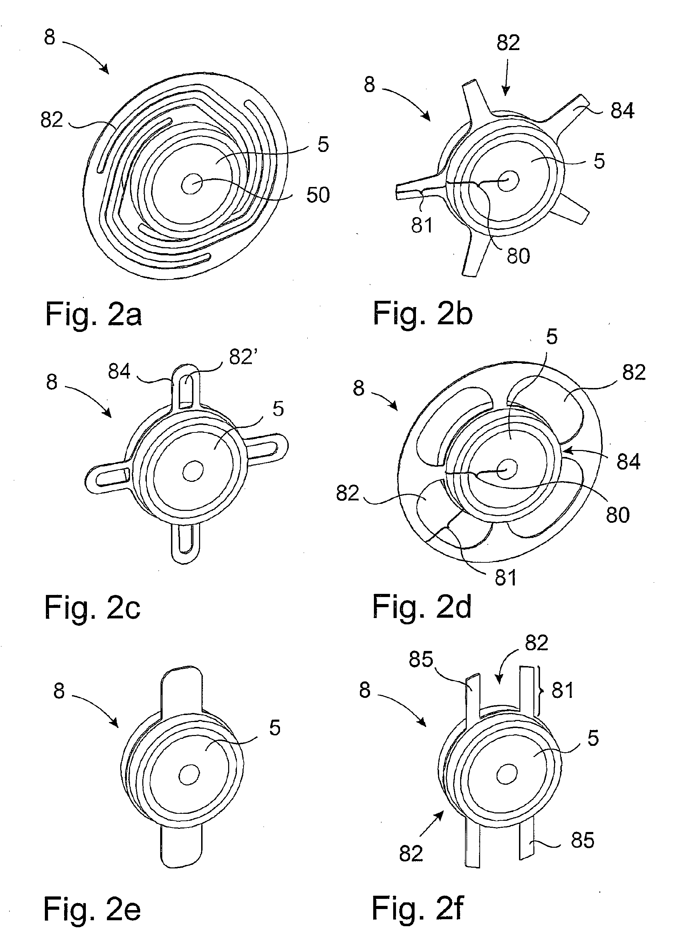

Die hieraus resultierende Führung des Dichtelementes 5 hat, wie beschrieben einige Vorteile. Erreicht wird diese Führung dadurch, dass ein Federelement 8 vorgesehen ist, das in geeigneter Weise an dem Anstellkörper 3 festgelegt ist und bevorzugt mittig bzw. symmetrisch oder zentrisch das Dichtelement 5 trägt. Für die Ausgestaltung des Federelementes 8 gibt es hierbei eine Vielzahl verschiedener Varianten, wie sie z.B. noch in Fig. 2a-f geschildert werden. In dem hier gezeigten Ausführungsbeispiel ist z.B. das Dichtelement 5 im mittleren, als Aufnahmebereich 80 beschriebenen Bereich des Federelements 8 aufgespritzt, wobei in diesem Bereich das Federelement 8 entsprechende Durchbrechungen 83 aufweist, durch die das (elastische) spritzbare Material des Dichtelementes 5 hindurchdringt und eine insbesondere formschlüssige Verbindung mit dem Federelement 8 bildet.

Das Federelement 8 erlaubt eine Beweglichkeit des Dichtelements in einer Bewegungsrichtung, die parallel ist zu der Bewegung 33 des Anstellkörpers 3.

Hierzu ist das Federelement 8 an seinem äußeren Rand mit dem Anstellkörper 3 verbunden. Der Anstellkörper 3 weist in diesem Bereich einen radial (bezogen auf die Bewegungsrichtung 33 bzw. die Mittelachse 12) nach außen gerichteten flanschartigen Ring 34 auf, der eine Anlage- bzw. Verbindungsfläche für das Federelement 8 bildet. Dieser Ring 34 ragt dabei über den Durchmesser des Ankers 20 hervor in den Ventilraum 11.

Das Federelement 8 und das Dichtelement 5 sind in dem Aufnahmeraum 30 angeordnet und somit geführt und auch geschützt. Der Aufnahmeraum 30 wird begrenzt einerseits von der Stirnfläche 35 des Anstellkörpers 3, einem zylinderförmigen Rand 36, der sich an die Stirnfläche 35 anschließt und in den Ring 34 übergeht, sowie von einer Abdeckkappe 7, die teller- oder topfartig an den Ring 34 anschließt und davon in Richtung der Düse 4 verläuft.

Diese Abdeckkappe 7 hat mehrere Aufgaben. Zum einen schließt sie den Aufnahmeraum 30 ab. Dem steht nicht entgegen, dass die Abdeckkappe 7 z.B. Öffnungen 71 oder Aussparungen 70 aufweist. Die Abdeckkappe 7 ist z.B. einstückig am Ring 34 als Teil des Anstellkörpers 3 weitergeführt oder hier als separates Teil ausgeführt und befestigt, z.B. angelasert, angeschweißt, angeklebt, aufgelötet oder in sonstiger, wie z.B. bereits beschriebener mechanischer Weise (z.B. aufgestemmt usw.), fest verbunden.

Bezüglich der Mittelachse 12 ist die Abdeckkappe 7 z.B. rotationssymmetrisch. Der mittlere Bereich, als Boden 73 bezeichnet, ist im Wesentlichen eben verlaufend, die Abdeckkappe 7 besitzt an ihren Rändern einen, in Richtung des Anstellkörpers hochgebogenen Rand 72, der in den Verbindungsbereich zum Anschluss der Abdeckkappe 7 an dem Anstellkörper 3 mündet.

Am Boden 73 der Abdeckkappe 7 ist eine Aussparung 70 vorgesehen, die so bemessen ist, dass die Abdeckkappe 7 im Bodenbereich 73 nicht mit der Düse 4 kollidiert.

Durch die Anordnung der Aussparung 70 ist es möglich, dass das Dichtelement 5 satt auf den Düsensitz 40 der Düse 4 aufsetzbar ist. So ist in Fig. 1a gut zu erkennen, dass der Boden 73 seitlich neben der Aussparung 70 auf die Düse 4 aufgeschoben ist. Natürlich ist die Anordnung so gewählt, dass nur minimale Spalte oder Spiele bestehen.

An dem hier gezeigten Ausführungsbeispiel ist das Ventil 1 mit einer Vorsteuerdüse 51 ausgestattet. Diese ist in dem Dichtelement 5 derart realisiert, dass diese eine bevorzugt zur Mittelachse 12 parallel verlaufende Durchdringungsöffnung 50 aufweist. Diese Durchdringungsöffnung 50 mündet auf der dem Anstellkörper 3 abgewandten Seiten in die Düse 4 und wird auf der, dem Anstellkörper 3 zugewandten, Seite von einer Dichtfläche 31 verschlossen. Diese Dichtfläche 31 ist im hier gezeigten Ausführungsbeispiel identisch mit der Stirnfläche 35 des Anstellkörpers 3.

Es ist gut zu erkennen, dass auf der Dichtfläche 31 in Richtung des Dichtelementes 5, im Bereich der Vorsteuerdüse 51 ein Dichtring 32 vorsteht, der in das elastische Material des Dichtelementes 5 aufgrund der Schließstellung des Ventiles 1 eindrückt. Der Dichtring 32 definiert damit aber auch die hier wirksame Dichtfläche und somit die Schließkraft, die in einem Öffnungsschritt zu überwinden ist; es ist klar, dass diese Dichtfläche deutlich kleiner ist, als die Dichtfläche am Düsensitz 40. Der "Trick" mit der Vorsteuerdüse ist nun, dass die notwendigen Kräfte zum Öffnen des Ventiles dadurch reduziert werden und ein kleinerer (elektromagnetischer) Antrieb für die Betätigung des Ventiles ausreicht.

Der Bereich radial, seitlich neben dem Dichtring 32 ist dabei druckausgeglichen mit dem übrigen Ventilinneren, dem Ventilraum 11. Auch in der geschlossenen Stellung des Ventiles 1 erfolgt dieser Druckausgleich über die Öffnung 71, die in dem seitlichen Rand 72 der Abdeckkappe 7 vorgesehen ist und durch Durchbrüche 83 im Federlement 8, durch welche der der Stirnfläche 35 des Anstellkörpers 3 zugewandte Bereich des Aufnahmeraumes 30 druckausgeglichen ist.

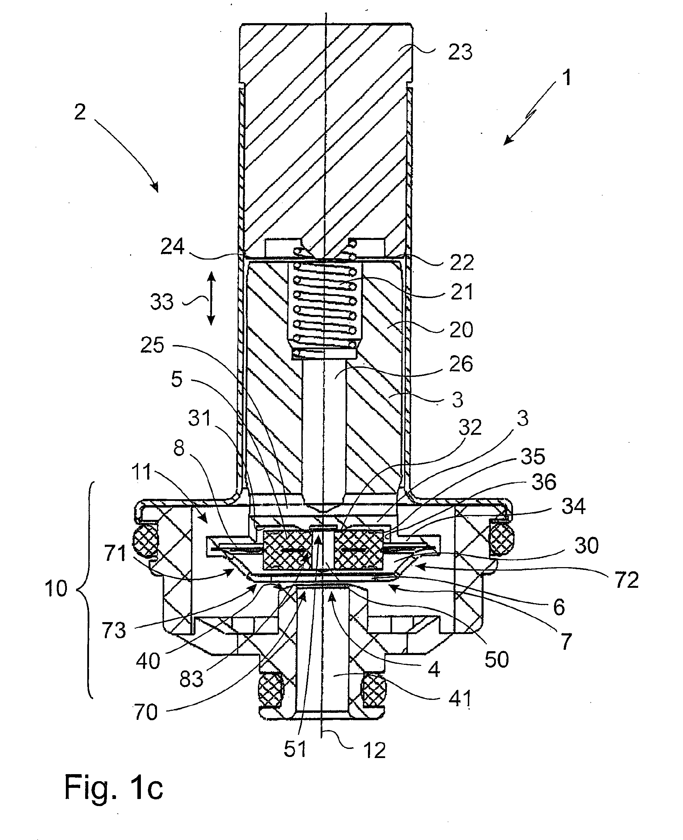

Die Öffnungsbewegung des in Figur 1a komplett geschlossenen und in Figur 1c komplett geöffneten Ventiles, soll hier nun kurz erläutert werden.

(Haupt-) Düse 4 und Vorsteuerdüse 51 sind geschlossen, der Anstellkörper 3 ist durch die Rückstellfeder 21 in Richtung der Düse 4 versetzt, der Elektromagnet ist stromlos. Ausgehend von dieser geschlossenen Stellung wird der Antrieb 2 aktiviert, z. B. wird die nicht gezeigte Spule des Elektromagneten mit Strom beaufschlagt, wodurch sich zwischen dem Anker 20 und dem in Magnetkern 23 (entgegen der Kraft der Rückstellfeder 21) vorgesehenen Luftspalt eine Magnetfeldlinienkonstellation ergibt, die versucht, den Anker 20 in Richtung des Magnetkernes 23 zu ziehen. Diese nach oben gerichtete Bewegung des Ankers 20 führt zu einer Abhebbewegung des Anstellkörpers 3 relativ zur Düse 4, wobei zuerst die Vorsteuerdüse 51 geöffnet wird, das heißt, die Dichtfläche 31 weicht nach oben zurück und der Dichtring 32 taucht aus dem komprimierten Material des Dichtelementes 5 aus, wodurch sich die Vorsteuerdüse 51 öffnet. Im Übrigen liegt das Dichtelement 5 weiterhin auf der Düse 4 auf.

Der zu regelnde Druck liegt im Ventilraum 11 an, der abströmseitige, mit, in der Regel, geringeren Druck beaufschlagte, Bereich befindet sich in der Ableitung 41 der Düse 4, somit liegt auch der Arbeitsdruck an dem Dichtring 32 der Vorsteuerdüse 51 an und die für die Öffnung der Vorsteuerdüse notwendige Kraft ergibt sich aus dem Produkt der wirksamen Dichtfläche und der Druckdifferenz zwischen dem Ventilraum 11 und dem Düsenauslass 41. So erfolgt dann ein Vorfluten des Düsenauslasses 41 und somit eine Reduzierung des Druckunterschiedes zwischen dem Düsenauslass 41 und dem Ventilraum 11, wodurch die notwendige Kraft zum Abheben des Dichtelementes 5 von dem Düsensitz 40 (mit größerer Dichtfläche) reduziert wird.

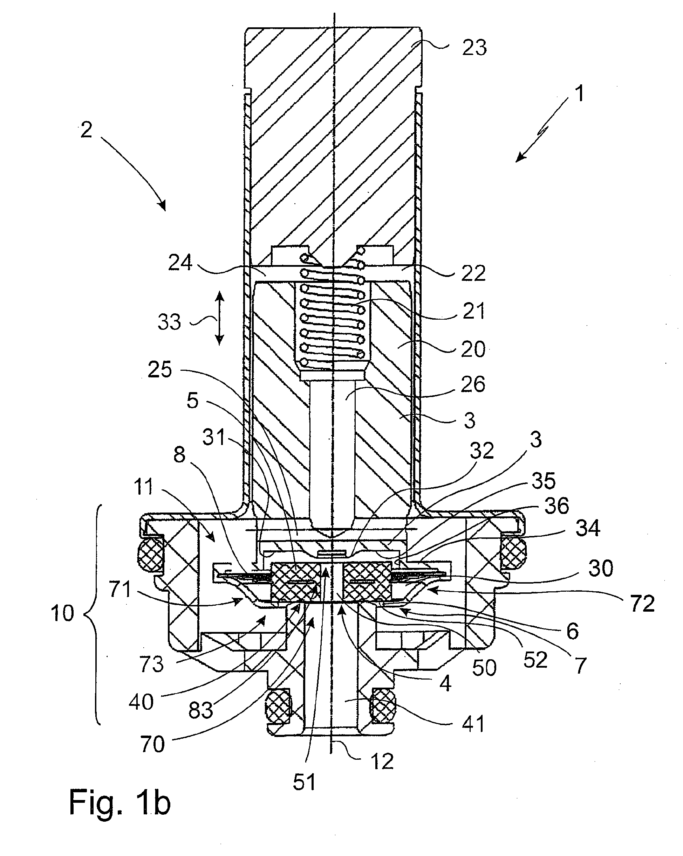

Die geöffnete Vorsteuerdüse 51 ist in Figur 1b gezeigt, es ist auch in Figur 1b gut zu sehen, dass der an der Aussparung 70 anschließende ringartige Bereich der Abdeckkappe 7 an dem der Düse 4 zugewandte Bereich des Dichtelementes 5 anliegt. Der die Aussparung 70 umgebende Rand bildet einen Mitnehmer 6, der jetzt in der in Figur 1b gezeigten Situation in Aktion tritt, nämlich bei einer weiteren Rückzugsbewegung des Anstellkörpers 3 (Verringerung des Luftspaltes 24) liegt der Mitnehmer 6 am Dichtelement 5 an und hebt diesen von dem Düsensitz 40 ab. Dies erfolgt ohne zusätzliche mechanische Beanspruchung des Federelementes 8 und des Ventil 1 gelangt in die Stellung wie sie in Figur 1c gezeigt ist, der Luftspalt 24 ist minimalst, die Düse 4 ist komplett geöffnet, die Abdeckkappe 7 ist über die Düse 4 angehoben.

Die Anordnung ist dabei so gewählt, dass in der geöffneten Stellung die Vorsteuerdüse 51 wieder geschlossen ist, wodurch das Dichtelement 5 in der geöffneten Stellung eine definierte Position einnimt und somit auch der Strömungsspalt an der Düse 4 genau reproduzierbar definiert ist. Dies kann durch die entsprechende Ausgestaltung der Vorspannung des Federelementes 8 beispielhaft problemlos realisiert werden. Es sind aber auch andere Vorspannungsmöglichkeiten erfindungsgemäß möglich.

Das Dichtelement 5 besitzt auf seiner der Düse 4 zugewandten Seite eine Ringnut 52, die als Freistellung bezüglich des Mitnehmers 6 wirkt. Der Mitnehmer 6, hier der innere Rand der Aussparung 70 im Boden 73 der Abdeckkappe 7 liegt dabei auf dem radial außerhalb der Ringnut 52 vorgesehenen Bereich des Dichtelements 5 an, wenn der Mitnehmer 6 mit dem Dichtelement 5 zusammenwirkt. Die Ringnut 52 wirkt einer drohenden Kerbbildung aufgrund des Zusammenwirkens des radial außenliegenden Bereiches des Dichtelementes 5 mit dem Mitnehmer 6 effektiv entgegen.

In den Figuren 2a bis 2f sind eine Vielzahl unterschiedlicher Ausführungsbeispiele des Federelementes 8 gezeigt, welches das Dichtelement 5 trägt.

Figur 2a zeigt z.B. die Ausgestaltung mit einer Mäanderfeder, bei welcher sich spiralförmige Durchdringungsöffnungen 82 an spiralförmig verlaufende federnde Materialstege oder -Brücken 85 anschließen. Der Federweg bestimmt sich dabei insbesondere durch die Länge dieser Materialbrücken 85. Gleichzeitig bildet die Durchdringungsöffnung 82 auch einen Druckausgleich für die Vorder- und Rückseite des ansonsten dicht in der Abdeckkappe 7 beziehungsweise Anschwellkörper 3 eingesetzten Federlementes.

Für eine bessere Orientierung in dem Federlement ist in Figur 2b der Aufnahmebereich 80 von dem Federbereich 81 getrennt gezeigt. Der Federbereich 81 liegt radial außen und übernimmt schwerpunktmäßig (bevorzugt ausschließlich) die federnde Eigenschaft des Federelementes 8. Der Aufnahmebereich 80 dient zur Aufnahme und zur Befestigung des Dichtelementes 5. In Figur 2b sind radial verlaufende Strahlen 84 vorgesehen, die den Federbereich 81 bilden, zwischen ihnen erstrecken sich die Durchdringungsöffnungen 82, die einseitig offen sind, aber in der eingebauten Situation natürlich überall umrandet sind.

Figur 2c zeigt einen ähnlichen Aufbau wie Figur 2b, die Befestigungsstrahlen 84 sind hier kreuzförmig angeordnet und bilden ihrerseits Durchbrechungen 82' aus.

Figur 2d zeigt ein Federelement, dass scheibenartig gebildet ist, ähnlich wie die "Mäanderfeder" Variante nach Figur 2a, aber auch mit im Wesentlichen radial verlaufenden federnden Strahlen 84, die sich im radial äußeren Bereich aufweiten und so die vier gleichgroßen äquidistant angeordneten Durchdringungsöffnungen 82 in Umfangsrichtung des Federelementes 8 bilden.

Figur 2e zeigt eine zweiseitige, gegenüberliegend gelagerte Ausgestaltung des Federelementes 8, die in Figur 2f noch weiter vereinfacht wird, in dem nur vier Stäbe 85 H-artig angeordnet sind und zwischen sich das Dichtelement 5 tragen.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Von einem Antrieb betätigbares Ventil, wobei der Antrieb (2) einen Anstellkörper (3) relativ zu einer Düse (4) zum Öffnen und Schließen der Düse (4) positioniert, wobei der Anstellkörper (3) an seiner der Düse (4) zugewandten Seite ein Dichtelement (5) aufweist, das in der geschlossenen Stellung des Ventils (1) auf dem Düsensitz (40) liegt und in der geöffneten Stellung des Ventils (1) vom Düsensitz (40) abgehoben ist, wobei das Dichtelement (5) über ein Federelement (8) am Anstellkörper (3) gelagert und relativ zu diesem beweglich ist **dadurch gekennzeichnet, dass** das Federelement (8) eine bezüglich des Düsensitzes (40) radiale und insbesondere reibungsfreie Führung des Dichtelementes (5) am oder im Anstellkörper (3) bewirkt.

2. Ventil nach Anspruch 1, **dadurch gekennzeichnet, dass** der Anstellkörper (3) einen Mitnehmer (6) aufweist, der zumindest beim Abheben des Dichtelementes (5) vom Düsensitz (40) am Dichtelement (5) anliegt.

3. Ventil nach Anspruch 2, **dadurch gekennzeichnet, dass** der Mitnehmer (6) als Anlagekragen ausgebildet ist, der am Dichtelement (5) auf der dem Düsensitz (40) zugewandten Seite, beim Abheben des Dichtelementes (5), insbesondere ring- oder punkt- oder segmentartig oder abschnittsweise, anliegt und/oder der Anstellkörper (3) auf der der Düse (4) zugewandten Seite eine zumindest teilgeöffnete, den Mitnehmer (6) bildende, das Dichtelement (5) zumindest teilweise abdeckende Abdeckkappe (7) aufweist, insbesondere wobei die Abdeckkappe (7) im Bereich der Düse (4) eine Aussparung (70) aufweist und/oder dadurch, dass die Abdeckkappe (7) einen Aufnahmeraum (30) des Anstellkörpers (3) zumindest teilweise verschließt, der Aufnahmeraum (30) das Dichtelement (5) aufnimmt und die Abdeckkappe (7) zumindest eine Öffnung (71) aufweist, durch welche der Aufnahmeraum (30) bei geschlossener Stellung des Ventils (1) belüftbar ist.

4. Ventil nach Anspruch 3, **dadurch gekennzeichnet, dass** die Abdeckkappe (7) an den Anstellkörper (3) einstückig angeordnet, angeschweißt, aufgeklebt, aufgeschnappt, aufgeclipst, aufgestemmt, aufgebörtelt oder angelötet ist und/oder die Abdeckkappe (7) und der Anstellkörper (3) aus gleichem oder unterschiedlichem Material besteht.

5. Ventil nach einem der vorhergehenden Ansprüche, **dadurch gekennzeichnet, dass** das Dichtelement (5) eine Durchdringungsöffnung (50) aufweist, die einerseits in die Düse (4) mündet und andererseits dem Anstellkörper (3) zugewandt eine Vorsteuerdüse (51) bildet, und die Vorsteuerdüse (51) in der geschlossenen Stellung des Ventils (1) von der dem Dichtelement (5) zugewandten Dichtfläche (31) des Anstellkörpers (3) verschlossen ist und/oder die Dichtfläche (31) einen die Vorsteuerdüse (51) umgebenden, und in der geschlossenen Stellung das aus elastischem Material bestehende Dichtelement (5) verformenden Dichtring (32) oder Dichtwulst aufweist.

6. Ventil nach Anspruch 5, **dadurch gekennzeichnet, dass** ausgehend von der geschlossenen Stellung eine Rückzugsbewegung des Anstellkörpers (3) zunächst die Vorsteuerdüse (51) öffnet und der Anstellkörper (3) relativ zu dem auf dem Düsensitz (40) ruhenden Dichtelement (5) bewegt wird, und bei einer weiteren Rückzugsbewegung der Mitnehmer (6) das Dichtelement (5) vom Düsensitz (40) abhebt.

7. Ventil nach einem der vorhergehenden Ansprüche, **dadurch gekennzeichnet, dass** das Federelement (8) aus flächig elastischem Material, zum Beispiel Federstahl, gebildet ist und/oder das Federelement (8) das Dichtelement (5) trägt, wobei das Dichtelement (5) auf dem Federelement (8) aufgespritzt, eingeknöpft, aufgeclipst, aufvulkanisiert oder angeklebt ist.

8. Ventil nach einem der vorhergehenden Ansprüche, **dadurch gekennzeichnet, dass** das Dichtelement (5) auf der der Düse (4) zugewandten Seite eine, insbesondere als Freistellung wirkende Ringnut (52) aufweist.

9. Ventil nach einem der vorhergehenden Ansprüche, **dadurch gekennzeichnet, dass** das Federelement (8) als Mäanderfeder oder Tellerfeder oder Sternfeder oder Blattfeder ausgebildet ist.

10. Ventil nach einem der vorhergehenden Ansprüche, **dadurch gekennzeichnet, dass** das Federelement (8) einen Aufnahmebereich (80) und einen Federbereich (81) aufweist, und das Dichtelement (5) im Aufnahmebereich (80) angeordnet ist und/oder das Federelement (8) mit dem Anstellkörper (3) verschweißt oder aufgeklebt oder aufgestemmt oder aufgebörtelt oder angelötet ist.

11. Ventil nach Anspruch 10, **dadurch gekennzeichnet, dass** im Federbereich (81) zumindest eine Durchdringungsöffnung (82) vorgesehen ist.

12. Ventil nach einem der Ansprüche 3 bis 11, **dadurch gekennzeichnet, dass** das Federelement (8) zwischen Abdeckkappe (7) und Anstellkörper (3) angeordnet ist.

13. Ventil nach einem der vorhergehenden Ansprüche, **gekennzeichnet durch** eine im Wesentlichen parallele Wirkrichtung des Federelementes (8) und der Anstell- bzw. Rückzugsbewegung (33) des Anstellkörpers (3).

14. Ventil nach einem der vorhergehenden Ansprüche, **dadurch gekennzeichnet, dass** als Antrieb (2) ein Elektromagnet vorgesehen ist, wobei der Elektromagnet eine mit elektrischem Strom beaufschlagbare Spule aufweist und ein beweglich gelagerter Anker (20) bei Strombeaufschlagung, insbesondere gegen die Kraft einer Rückstellfeder (21), bewegbar ist und der Anker (20) den Anstellkörper (3) bewegt oder der Anker (20) den Anstellkörper (3) bildet.

15. Ventil nach einem der vorhergehenden Ansprüche, **gekennzeichnet durch** eine im Wesentlichen geradlinige oder Dreh- bzw. Klappbewegung des Anstellkörpers (3).

## Claims

1. Drive-operated valve, wherein the drive (2) positions an angling element (3) relatively to a nozzle (4) for opening and closing the nozzle (4), wherein the angling element (3) has on its side facing the nozzle (4) a seal element (5) that rests on the nozzle seat (40) when the valve (1) is closed, and is lifted from the nozzle seat (40) when the valve (1) is opened, wherein the seal element (5) is supported via a spring element (8) on the angling element (3) and can move relatively thereto, **characterized in that** the spring element (8) effects, with respect to the nozzle seat (40), a radial and in particular friction-free guide of the seal element (5) at or in the angling element (3).

2. Valve according to claim 1, **characterized in that** the angling element (3) has a tappet (6) that is in contact with the seal element (5) at least while the seal element (5) is lifted from the nozzle seat (40).

3. Valve according to claim 2, **characterized in that** the tappet (6) is configured as contact collar that is in contact with the seal element (5) on the side facing the nozzle seat (40) while the seal element (5) is lifted, in particular annularly, or spot- or segment-like or in sections, and/or the angling element (3) has on its side facing the nozzle (4) a cover cap (7) that is at least partly open, forms the tappet (6) and covers the seal element (5) at least partly, in particular wherein the cover cap (7) has a recess (70) in the area of the nozzle (4), and/or **in that** the cover cap (7) seals at least partly a holding space (30) of the angling element (3), the holding space (30) holds the seal element (5) and the cover cap (7) has at least one opening (71) through which the holding space (30) can be ventilated when the valve (1) is closed.

4. Valve according to claim 3, **characterized in that** the cover cap (7) is arranged at the angling element (3) in one piece, welded, glued, snapped-on, clipped-on, caulked, flanged or soldered-on, and/or the cover cap (7) and the angling element (3) consist of identical or different material.

5. Valve according to one of the preceding claims, **characterized in that** the seal element (5) has a penetration opening (50) that runs, on the one hand, in the nozzle (4) and forms, on the other hand, facing the angling element (3) a servo valve (51), and the servo valve (51) is sealed, when the valve (1) is closed, by the sealing surface (31) of the angling element (3) facing the seal element (5), and/or the sealing surface (31) has a sealing ring (32) or sealing bead surrounding the servo valve (51) and deforming the seal element (5) consisting of elastic material in the closed position.

6. Valve according to claim 5, **characterized in that** beginning with the closed position a retraction movement of the angling element (3) first opens the servo valve (51), and the angling element (3) is moved relatively to the seal element (5) resting on the nozzle seat (40), and, during another retraction movement, the tappet (6) lifts the seal element (5) from the nozzle seat (40).

7. Valve according to one of the preceding claims, **characterized in that** the spring element (8) is formed of flat elastic material, for example spring steel, and/or the spring element (8) carries the seal element (5), wherein the seal element (5) is sprayed-on, buttoned-in, clipped-on, vulcanized-on or glued to the spring element (8).

8. Valve according to one of the preceding claims, **characterized in that** the seal element (5) has on the side facing the nozzle (4) a circular groove (52) acting in particular as release position.

9. Valve according to one of the preceding claims, **characterized in that** the spring element (8) is configured as meander spring or disc spring or star spring or leaf spring.

10. Valve according to one of the preceding claims, **characterized in that** the spring element (8) has a holding area (80) and a spring area (81), and the seal element (5) is arranged in the holding area (80), and/or the spring element (8) is welded or glued or caulked or flanged or soldered to the angling element (3).

11. Valve according to claim 10, **characterized in that** in the spring area (81) at least one penetration opening (82) is provided.

12. Valve according to one of the claims 3 to 11, **characterized in that** the spring element (8) is arranged between cover cap (7) and angling element (3).

13. Valve according to one of the preceding claims, **characterized by** an essentially parallel operative direction of the spring element (8) and the angling and/or retracting movement (33) of the angling element (3).

14. Valve according to one of the preceding claims, **characterized in that** as drive (2) a solenoid is provided, wherein the solenoid has a coil that can be electrified, and a movably supported armature (20) can be moved when electrified, in particular against the force of a return spring (21), and the armature (20) moves the angling element (3), or the armature (20) is the angling element (3).

15. Valve according to one of the preceding claims, **characterized by** an essentially straight or rotational or folding movement of the angling element (3).

## Revendications

1. Valve pouvant être pilotée par une commande de façon à ce que la commande (2) modifie la position d'un poussoir mobile (3) par rapport à une buse (4) afin d'ouvrir ou de fermer cette buse (4) et à ce que ce poussoir mobile (3) comporte sur son côté faisant face à la buse (4) un élément d'étanchéité (5), plaqué en position fermée de la valve (1) contre le siège de buse (40) et séparé du siège de buse (40) en position ouverte de la valve (1) et à ce que cet élément d'étanchéité (5) est maintenu de façon mobile par rapport au poussoir mobile (3) par un élément à ressort (8), **caractérisée en ce que** l'élément à ressort (8) permet par rapport au siège de buse (40) d'obtenir un guidage radial et en particulier sans frottement de l'élément d'étanchéité (5) sur ou dans le poussoir mobile (3).

2. Valve selon la revendication 1, **caractérisée en ce que** le poussoir mobile (3) comporte un élément suiveur (6) s'appliquant sur l'élément d'étanchéité (5) au moins lors de la séparation de l'élément d'étanchéité (5) du siège de buse (40).

3. Valve selon la revendication 2, **caractérisée en ce que** l'élément suiveur (6) est configuré comme une bride de contact appuyant en particulier avec une surface d'anneau ou ponctuellement ou par un segment de l'anneau ou partiellement contre le côté de l'élément d'étanchéité (5) faisant face au siège de buse (40) lors du mouvement de séparation de l'élément d'étanchéité (5) et/ou **en ce que** le poussoir mobile (3) comporte sur son côté faisant face à la buse (4) un couvercle (7) au moins partiellement ouvert, formant l'élément suiveur (6) et couvrant au moins partiellement l'élément d'étanchéité (5) et comporte en particulier un évidement (70) au niveau de la buse (4) et/ou **en ce que** le couvercle (7) enferme au moins partiellement un espace de réception (30) du poussoir mobile (3) et **en ce que** cet espace de réception (30) reçoit l'élément d'étanchéité (5) et **en ce que** le couvercle (7) possède au moins une ouverture (71) par laquelle en position fermée de la valve (1) l'espace de réception (30) peut être aéré.

4. Valve selon la revendication 3, **caractérisée en ce que** le couvercle (7) forme une seule pièce avec le poussoir mobile (3) par assemblage, brasure, collage, crochetage, clipsage, déformation, repliement ou soudage et/ou **en ce que** le couvercle (7) et le poussoir mobile (3) sont constitués soit de la même matière soit de matières différentes.

5. Valve selon une des revendications précédentes, **caractérisée en ce que** l'élément d'étanchéité (5) comporte une ouverture de passage (50) qui est d'un côté ouverte vers la buse (4) et qui forme de l'autre côté faisant face au poussoir mobile (3) une buse de pilotage (51) de façon à ce que cette buse de pilotage (51) est fermée par la surface d'étanchéité (31) faisant face à l'élément d'étanchéité (5) du poussoir mobile (3) lorsque la valve (1) est en position fermée et/ou **en ce que** la surface d'étanchéité (31) possède une excroissance d'étanchéité en forme d'anneau (32) déformant l'élément d'étanchéité (5) élastique en position fermée et entourant la buse de pilotage (51).

6. Valve selon la revendication 5, **caractérisée en ce qu'**un mouvement de recul du poussoir mobile (3) s'effectue à partir d'une position fermée, ouvrant d'abord la buse de pilotage (51) et déplaçant le poussoir mobile (3) par rapport à l'élément d'étanchéité (5) appliqué contre le siège de buse (40) et **en ce qu'**un mouvement de recul supplémentaire sépare l'élément d'étanchéité (5) du siège de buse (40) par l'élément suiveur (6).

7. Valve selon une des revendications précédentes, **caractérisée en ce que** l'élément à ressort (8) consiste en un matériau plat et élastique, par exemple de l'acier à ressorts et/ou **en ce que** l'élément à ressort (8) maintient l'élément d'étanchéité (5) de façon à ce que l'élément d'étanchéité (5) est attaché par procédé d'injection, crochetage, clipsage, vulcanisation ou collage.

8. Valve selon une des revendications précédentes, **caractérisée en ce que** l'élément d'étanchéité (5) comporte sur son côté faisant face à la buse (4) une gorge circulaire (52) aidant à la séparation.

9. Valve selon une des revendications précédentes, **caractérisée en ce que** l'élément à ressort (8) est configuré comme un ressort à méandres, une rondelle ressort ou comme un ressort à lame.

10. Valve selon une des revendications précédentes, **caractérisée en ce que** l'élément à ressort (8) comporte une zone de réception (80) et une zone à ressorts (81) et **en ce que** l'élément d'étanchéité (5) est situé dans la zone de réception (80) et/ou **en ce que** l'élément à ressorts (8) est attaché au poussoir (3) par procédé de brasure, collage, déformation de matière, repliement ou soudage.

11. Valve selon la revendication 10, **caractérisée en ce qu'**au moins une ouverture de passage (82) est prévue au niveau de la zone à ressort (81).

12. Valve selon une des revendications précédentes 3 à 11, **caractérisée en ce que** l'élément à ressort (8) est situé entre le couvercle (7) et le poussoir (3).

13. Valve selon une des revendications précédentes, **caractérisée par** une direction d'effet essentiellement parallèle de l'élément à ressort (8) et du mouvement d'avancement ou de recul (33) du poussoir (3).

14. Valve selon une des revendications précédentes, **caractérisée en ce qu'**un aimant électrique est prévu comme commande (2) et que cet aimant électrique comporte une bobine pouvant être parcourue par un courant électrique et un noyau mobile (20) pouvant se déplacer sous l'effet du courant en particulier contre la force d'un ressort de rappel (21) de façon à ce que le noyau mobile (20) déplace le poussoir (3) ou à ce que le poussoir (3) est formé par le noyau mobile (20).

15. Valve selon une des revendications précédentes, **caractérisée par** un mouvement essentiellement rectiligne ou rotatif ou de pivotement du poussoir (3).
